# FASCICULE DE BREVET EUROPEEN

(11) **EP 0 436 495 B1**
(45) Date de publication et mention de la délivrance du brevet: **24.11.1993**
(21) Numéro de dépôt: 91100129.5
(22) Date de dépôt: 03.01.1991
(51) Int. Cl.: B29D 30/06

(54) **Moule à secteurs à auto-verrouillage, pour la vulcanisation des enveloppes de pneumatiques**
Selbstverriegelnde segmentierte Form zum Vulkanisieren von Reifen
Self-locking segmented mould for volcanising tyres

(30) Priorité: 02.01.1990 FR 9000039
(43) Date de publication de la demande: 10.07.1991
(73) Titulaire: COMPAGNIE GENERALE DES ETABLISSEMENTS MICHELIN - MICHELIN & CIE, 63040 Clermont-Ferrand Cédex (FR)
(72) Inventeur: Laurent, Daniel, F-38240 Meylan (FR)
(74) Mandataire: Bauvir, Jacques

(56) Documents cités:
- FR-A- 1 301 779
- FR-A- 2 087 540

## Description

La présente invention propose un nouveau type de moule à secteurs pour enveloppes de pneumatiques.

Les moules usuels sont constitués de plusieurs pièces séparées qui, par rapprochement relatif, délimitent un espace de moulage quasi toroïdal. Ils comportent essentiellement deux coquilles pour le moulage des flancs, et plusieurs secteurs périphériques situés entre les coquilles pour le moulage de la bande de roulement. Le rapprochement de toutes ces pièces est assuré suivant une cinématique appropriée, par un mécanisme voulu. L'ébauche crue du futur pneumatique doit être fermement appliquée et maintenue contre le moule pour obtenir des dimensions géométriques et une architecture précises et pour, le cas échéant, imprimer la sculpture de la bande de roulement. Il en résulte que l'ébauche exerce une pression importante sur les pièces du moule, pression (dite interne) qui tend à ouvrir le moule, donc à en écarter les pièces.

Il existe de nombreux systèmes qui maintiennent le moule fermement clos par l'action conjuguée ou séparée de vérins hydrauliques ou pneumatiques et de pièces mécaniques de calage (comme par exemple des couronnes périphériques), qui reportent l'appui sur la structure de la presse via le mécanisme de fermeture du moule. Pour obtenir une fabrication de qualité, il est indispensable de développer une force de fermeture importante. Dès lors, toutes les pièces assurant la cinématique du moule doivent être dimensionnées pour ne pas subir de déformation. Il en résulte qu'un ensemble moule-presse est une machine massive et coûteuse.

Le but de la présente invention est de contenir la pression interne de moulage au niveau du moule.

Le moule selon l'invention, du type à secteurs, pour le moulage et la vulcanisation des enveloppes de pneumatiques, est remarquable en ce que les coquilles et secteurs coopèrent pour résister à la pression interne et rester en position de fermeture sans le concours de pièces additionnelles de calage ou de maintien.

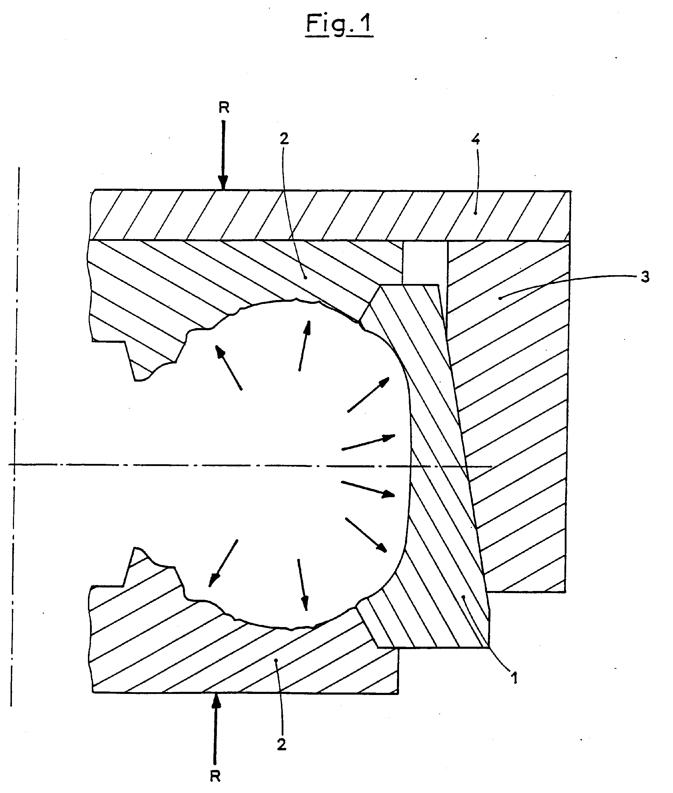

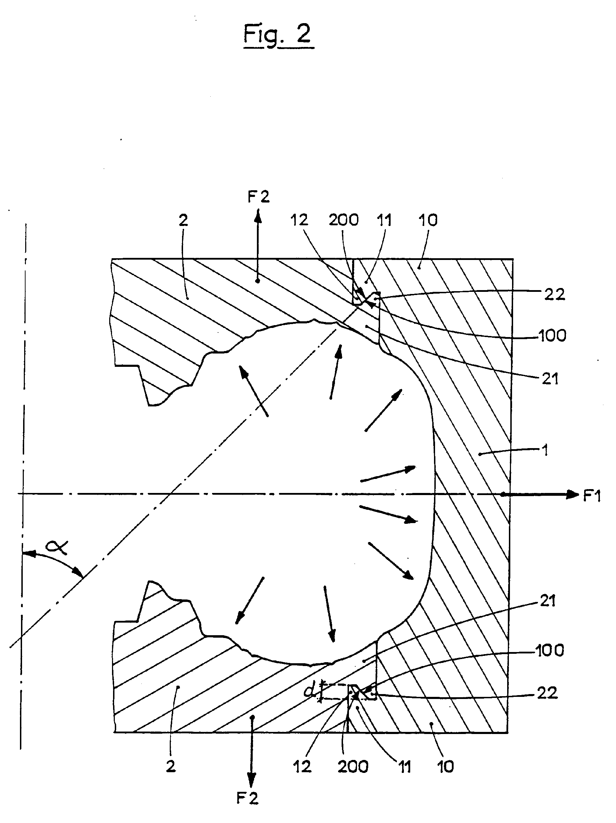

L'invention sera mieux comprise en consultant la figure 2 qui illustre une réalisation préférable mais non limitative de l'invention, comparée avec la conception classique schématisée à la figure 1.

Tous les types de moules connus à ce jour ont en commun la caractéristique suivante : si elles ne sont pas fermement maintenues en place, les pièces constitutives, coquilles (2) et secteurs (1), peuvent se séparer sous l'action de la pression interne. Cela est illustré par la figure 1 représentant un de ces moules pour lequel le déplacement radial des secteurs est commandé par le déplacement axial d'une couronne (3), portée par un plateau (4). Le mouvement normal d'ouverture d'un tel moule est constitué par un écartement radial des secteurs (1) provoqué par un déplacement axial du plateau (4), puis un écartement axial relatif des coquilles (2). Pour plus de détails à ce sujet, on peut consulter par exemple le brevet FR-A-2 108 745. Il existe de nombreuses variantes dans la cinématique des moules à secteurs. Mais dans tous les cas, la pression interne est compensée par des réactions (R) extérieures au moule comme schématisé sur la figure 1.

Par contre, la figure 2 montre un exemple de moule selon l'invention, dont les coquilles (2) et les secteurs (1) ne peuvent en aucun cas se séparer sous l'action de la pression interne.

Chaque secteur (1) comporte à ses bords latéraux (10) une saillie (11) s'étendant radialement vers l'intérieur du moule et munie d'un rebord (12) s'étendant axialement vers l'intérieur du moule. L'extrémité radialement extérieure de chaque coquille (2) est terminée par un volume complémentaire et comporte donc une saillie (21) munie d'un rebord (22). Lesdits rebords (12) et (22) coopèrent pour maintenir le moule fermé lorsque celui-ci est soumis à une pression interne tendant à écarter axialement les coquilles (2) l'une de l'autre, et à reculer radialement les secteurs (1).

On réalise à cette fin des surfaces d'appui tronconiques (100) et (200) sur les rebords (12) et (22) desdits secteurs et desdites coquilles. Lesdites surfaces tronconiques (100) et (200) sont inclinées d'un angle α par rapport à l'axe du moule. Elles sont inclinées de telle sorte que les prolongements de la trace de ces surfaces tronconiques sur un plan méridien se coupent du côté radialement intérieur du secteur considéré. Pour que le moule reste toujours fermé, l'angle α doit être calculé de manière telle que l'effet de la pression interne sur les coquilles, qui tend à rapprocher les secteurs vers le centre du moule (voir effet des forces F₂ sur les secteurs), soit prépondérant par rapport à l'effet de la pression interne sur les secteurs (F₁) qui tend bien sûr à écarter les secteurs du centre du moule.

On remarque que les coquilles (2) ne peuvent s'écarter axialement du centre du moule. Elles en sont empêchées par les saillies (11) des secteurs.

Pour fermer un tel moule, il faut rapprocher axialement chaque coquille au-delà de sa position finale d'au moins la valeur de la cote (d) pour permettre aux secteurs de se rapprocher radialement à leurs positions de fermeture, c'est-à-dire pour permettre aux rebords (12) de franchir les rebords (22). Ensuite, on écarte axialement les coquilles l'une de l'autre jusqu'à leur position finale en prise sur les secteurs.

Pour l'ouvrir, il faut d'abord rapprocher axialement chaque coquille d'au moins la cote (d) pour permettre aux secteurs de s'écarter radialement ; ensuite les coquilles sont libres de se mouvoir axialement vers l'extérieur.

Les avantages d'une telle conception sont nombreux. L'invention permet d'alléger au maximum les organes assurant la cinématique du moule, qui doivent simplement porter les pièces du moule et les déplacer, et ne doivent plus résister à la pression de moulage ni maintenir le moule fermé.

Dans la conception classique par contre (voir figure 1), ce sont toujours les organes assurant la cinématique du moule qui résistent à la pression interne. Par exemple, les secteurs (1) sont retenus radialement par une couronne (3) à la condition que celle-ci soit retenue axialement. Le moule doit être maintenu fermé par l'action de forces de réaction axiales R développées par la presse.

Par contre, un moule à auto-verrouillage selon l'invention se maintient fermement clos de lui-même lorsque la pression interne augmente, et le mécanisme assurant la cinématique du moule n'a plus pour fonction de maintenir le moule fermé.

On peut, selon une variante de la présente invention, prévoir des parties moulantes amovibles. Dans ce cas, le terme "moule" n'est pas limité aux parties moulantes intégrées. Il doit être entendu qu'il désigne les pièces de support et les pièces moulantes.

Dans cette variante, les surfaces d'appui tronconiques assurant le verrouillage sont aménagées sur les pièces de support, formant une boîte résistante, à l'intérieur de laquelle sont montées les pièces moulantes. On retrouve, pour la boîte résistante, autant de pièces séparables qu'il y a de pièces moulantes. La boîte moulante est alors multidimensionnelle : on peut monter à l'intérieur de celle-ci des pièces moulantes pour toute une gamme de dimensions de pneumatiques, au besoin avec des pièces de calage n'ayant d'autre rôle que de combler les vides entre pièces moulantes et boîte résistante.

## Revendications

1. Moule à secteurs pour le moulage et la vulcanisation des enveloppes de pneumatiques, caractérisé en ce que les coquilles (2) et secteurs (1) coopèrent pour résister à la pression interne et rester en position de fermeture sans le concours de pièces additionnelles de calage ou de maintien.

2. Moule selon la revendication 1, caractérisé en ce que chaque secteur (1) comporte à ses bords latéraux (10) une saillie (11) s'étendant radialement vers l'intérieur, munie d'un rebord (12) s'étendant axialement vers l'intérieur du moule, et présentant une surface tronconique (100) inclinée d'un angle α par rapport à l'axe du moule de telle sorte que les prolongements de la trace de chaque surface tronconique sur un plan méridien se coupent du côté radialement intérieur du secteur considéré, et en ce que l'extrémité radialement extérieure de chaque coquille (2) comporte une saillie complémentaire (21) munie d'un rebord (22) présentant une surface tronconique (200) inclinée du même angle α par rapport à l'axe du moule.

3. Moule selon la revendication 2, caractérisé en ce qu'il est constitué de pièces moulantes et de pièces de support, au moins certaines des parties moulantes en contact avec le caoutchouc étant réalisées de manière à être amovibles des pièces de support, lesdites surfaces tronconiques étant réalisées sur les pièces de support.

## Patentansprüche

1. Segmentierte Form für das Formen und Vulkanisieren von Reifenlaufflächen, dadurch gekennzeichnet, daß die Kokillen (2) und Segmente (1) im Zusammenspiel funktionieren, um dem Innendruck zu widerstehen und ohne Zuhilfenahme zusätzlicher Teile zum Feststellen oder -halten in Schließstellung zu bleiben.

2. Form nach Anspruch 1, dadurch gekennzeichnet, daß jedes Segment (1) an seinen Seitenrändern (10) einen Vorsprung (11) aufweist, der sich radial in Richtung auf das Innere der Form erstreckt und mit einer Leiste (12) versehen ist, die axial in Richtung auf das Innere der Form verläuft und eine kegelstumpfförmige Auflagefläche (100) aufweist, die bezüglich der Achse der Form in einem Winkel α geneigt ist, so daß die Verlängerungen der Bahn jeder kegelstumpfförmigen Fläche auf einer meridionalen Ebene sich auf der radial gesehen inneren Seite des jeweiligen Segments schneiden, sowie dadurch, daß das radial außen liegende Ende jeder Kokille (2) einen mit einer Leiste (22) versehenen Vorsprung (21) in ergänzender Form trägt und eine kegelstumpfförmige Fläche (200) aufweist, die im gleichen Winkel α bezüglich der Achse der Form geneigt ist.

3. Form nach Anspruch 2, dadurch gekennzeichnet, daß sie aus Formungsteilen und Tragteilen besteht, wobei mindestens einige der in Berührung mit dem Gummi kommenden Formungsbereiche so ausgeführt sind, daß sie von den Tragteilen abzunehmen sind, wobei die genannten kegelstumpfförmigen Flächen auf den Tragteilen vorgesehen sind.

## Claims

1. A sector-type mold for the molding and vulcanizing of tires, characterized by the fact that the shells (2) and sectors (1) cooperate to withstand the internal pressure and to remain in closed position without the assistance of additional wedging or nolding parts.

2. A mold according to Claim 1, characterized by the fact that each sector (1) has at its lateral edges (10) a protrusion (11) which extends radially towards the outside, provided with a flange (12) which extends axially towards the inside of the mold and has a frustoconical surface (100) inclined by an angle α with respect to the axis of the mold in such a manner that the extensions of the trace of each frustoconical surface on a meridian plane intersect on the radially inner side of the sector in question, and by the fact that the radially outer end of each shell (2) has a complementary protrusion (21) provided with a flange (22) having a frustoconical surface (200) inclined by the same angle *a* with respect to the axis of the mold.

3. A mold according to Claim 2, characterized by the fact that it is formed of molding parts and support parts, at least some of the molding parts in contact with the rubber being developed in such a manner as to be removable from the support parts, the said frustoconical surfaces being developed on the support parts.
